# EUROPEAN PATENT APPLICATION

(11) **EP 0 879 878 A1**
(43) Date of publication of application: **25.11.1998**
(21) Application number: 97201547.3
(22) Date of filing: 23.05.1997
(51) Int. Cl.: C12H 1/04, C12C 5/02, A23L 2/44, A23L 2/80, A23L 1/015

(54) **Beer and similar light-sensitive beverages with increased flavour stability and process for producing them**

(71) Applicant: QUEST INTERNATIONAL B.V., 1411 GP Naarden (NL)
(72) Inventor: The designation of the inventor has not yet been filed
(74) Representative: Graham, John George

(57) **Abstract**

The invention provides a beer or similar light-sensitive beverage, which has been treated with a protein that binds riboflavin, resulting in a reduced "sunstruck" flavour formation after exposure of the beverage to light and also in an increased overall flavour stability of the beverage during storage. Suitable proteins include riboflavin-binding protein and flavodoxin.

## Description

The invention relates to improvements in the production of beer and similar light-sensitive beverages, in particular to the improvement of the flavour stability of such light-sensitive beverages, and to a process for producing such flavour-stabilized light-sensitive beverages.

### Background of the invention and prior art

The implications of exposure of beer to light and the subsequent effect on beer flavour has long been of interest to brewers. The formation of a "skunky" off-note, often called "sunstruck" flavour, when beer is exposed to light is a long-standing problem. Many international brewers see the formation of sunstruck flavour as a quality failure, albeit an often unavoidable one and market research generally indicates that beers which have sunstruck flavour are less drinkable than those which do not. Therefore, to preserve and grow sales volumes, accepted brewing practice recognises that sunstruck flavour should be avoided where possible.

The chemical compound which gives rise to sunstruck flavour was identified in 1961 by workers from Kirin Breweries, Japan (Kuroiwa & Hashimoto (1961) **reference 1**) as 3-methylbut-2-ene-1-thiol also known as prenyl mercaptan. Subsequent research by Hashimoto and others helped to elucidate the mechanism of formation, which is believed to proceed via free-radical cleavage of the prenyl side chain of isoalpha-acids, also known as isohumulones, followed by the combination of the prenyl radical with a thiol radical. The thiol radical in turn is the product of a free radical cleavage of various sulphur containing compounds including hydrogen sulphide and cysteine.
Using model systems, various groups have demonstrated the role of riboflavin as a mediator of light energy in the formation of sunstruck flavour (Blockmans *et al*. (1981) **reference 2**, and Irwin *et al*. (1993) **reference 3**).

In addition to work on sunstruck flavour, various groups have also conducted work on the oxidative degradation of isohumulones and the subsequent formation of stale flavours. This reaction can also proceed via photolysis mediated by riboflavin (Devreux *et al*. (1981) **reference 4**, and various references cited therein).
The photolytic cleavage of isohumulone via photo-sensitisation of riboflavin leading on the one hand to sunstruck flavour and on the other hand to oxidised stale flavours might prompt to suggestions for decreasing the concentration of riboflavin in light-sensitive beverages such as beer for improving their flavour stability during storage (see reference 3).

However, although it is known for decades that both flavour deterioration of beer is a problem (see reference 1 of 1961) and riboflavin is an important contributor to that problem (see reference 2 of 1981), up to now a solution for this problem has not become known. Thus there is still a need to decrease the influence of riboflavin on the flavour deterioration of beer and similar light-sensitive beverages. The present invention provides a solution for this long-standing problem.

### Summary of the invention

The present inventors considered that the development of sunstruck flavour might be counteracted by adding to the beer at least one so-called "flavin-binding compound" capable of binding to riboflavin or "riboflavin-like compounds" in such a way that the photo-sensitizing action of riboflavin-like compounds is disturbed. In this specification "riboflavin-like compounds" are defined as compounds containing an isoalloxazine three ring moiety. Examples include riboflavin, riboflavin-5'-phosphate (also known as flavin mononucleotide; FMN), flavin adenine dinucleotide (FAD). These compounds are also known as flavin nucleotides; they function as prosthetic groups of oxidation-reduction enzymes known as flavoenzymes or flavoproteins. Of course, such flavin-binding compound must be "food-grade", which means that it must meet food safety requirements and do not affect the physical stability of the beer or other beverage.
An alternative might be an immobilized flavin-binding compound with which the beer can be contacted for a time sufficiently long to bind the riboflavin-like compounds and which immobilized flavin-binding compound is afterwards separated from the beer. When such immobilized flavin-binding compounds are used the "food-grade" requirements are less severe, although it is preferred that even in this case an immobilized "food-grade" flavin-binding compound is used.
To prove that this principle would work, the present inventors have developed a method in which riboflavin is bound or inactivated. In this way the formation of sunstruck flavour can be inhibited or at least postponed for some time under conditions in which sunstruck flavour would have been formed when riboflavin would not be inactivated. It was found, that the use of either flavodoxin or riboflavin-binding protein retarded the formation of sunstruck flavour.

**Flavodoxin** occurs in, amongst others, *Azotobacter vinelandii*. It is an acidic (pI 4.0), stable protein with a low molecular weight (M.W. 15-22 kD), which in nature is associated with a single molecule of FMN by non-covalent binding (the holoform). At low pH the FMN and flavodoxin become dissociated and the apo-flavodoxin is formed, which can be isolated from the previously associated flavin, wherein "apo" indicates the form of the protein without an associated co-factor. The apo-flavodoxin of *A. vinelandii* is also capable of binding riboflavin and other flavin analogs. Both the amino acid sequence of (apo-)flavodoxin and the gene encoding it were published (Tanaka *et al*. (1975) **reference 5** and Bennett *et al*. (1988) **reference 6**).
*A. vinelandii* flavodoxin is able to dimerize due to the formation of intermolecular disulphide bonds between individual flavodoxin molecules, which can result in a loss of biological activity. To prevent this dimerization a modified flavodoxin was made, in which the cysteine residue of amino acid 69 was replaced by an alanine residue. This modified flavodoxin is indicated as "C69A flavodoxin". As an alternative the cysteine residue can be replaced by another amino acid residue, e.g. a serine residue resulting in a C69S flavodoxin. Other flavodoxins can be isolated from, amongst others, *Desulfovibrio vulgaris* and *Anabaena variabilis*, see e.g. Pueyo *et al*. (1996) **reference 7**.

**Riboflavin-binding protein** can be isolated from eggs from poultry, preferably from chicken eggs, as described in US-PS 4534971 (1985; **reference 8**), according to which the riboflavin-binding protein can be obtained in homogeneous form from chicken egg white by acid treatment, DEAE (diethylaminoethyl) Sephadex chromatography, and sulfopropyl-Sephadex chromatography, according to the procedure of J. Becvar (1973) Ph.D. thesis, University of Michigan (**reference 9**). The purified protein may be stored, for example, frozen at -20 °C. in 10 mMolar potassium phosphate, 1 mMolar EDTA pH 7.0 buffer, at concentrations between about 1 and 10 mMolar. The isolated yield is approximately 15 mg (0.37 µmol) per egg. The protein is stable as a sterile solution and as a lyophilized powder.
Another isolation method is described by Hamazume c.s. (1984; **reference 10**).
Riboflavin-binding proteins are also described by W.S.A. Innis-Whitehouse, A.H. Merrill Jr., and D.B. McCormick in Chapter 11 (Riboflavin Binding Proteins) of the book Chemistry and Biochemistry of Flavoenzymes, Vol. I, edited by F. Müller, CRC Press, Boston, (1991) 287-292 (**reference 11**), but these riboflavin-binding proteins have not been suggested as a means for improving the quality of beer and other light-sensitive beverages.
Both the apo-form and the holo-form of riboflavin-binding protein from chicken egg white are marketed by SIGMA Chemical Company, U.S.A. (1991; **reference 12**).

### Brief description of the drawings

**Figure 1** shows the effect of riboflavin upon free radical formation measured with electron spin resonance (ESR) also known as electron paramagnetic resonanc (EPR) in a model system at the pH of beer (pH = 4).
**Figure 2** shows the effect of various compounds that bind riboflavin, i.e. riboflavin-binding protein (RfBP), flavodoxin (Fdx), and a control non-binding protein, i.e. bovine serum albumin (BSA) upon free radical formation measured with electron spin resonance (ESR) in a model system at the pH of beer (pH = 4). The riboflavin concentration was 1 ppm = 2.7 µMolar.
**Figure 3** shows the effect of various concentrations (0, 0.3, 1.3, 2.7 and 13.5 µMolar) of riboflavin-binding protein (RfBP) upon free radical formation measured with electron spin resonance (ESR) in beer.

### Detailed description of the invention

In its broadest sense the present invention relates to a process for increasing the flavour stability of beer or other light-sensitive beverage, which process comprises inactivating the riboflavin-like compound or compounds present in that beverage by allowing them to bind to a flavin-binding compound present in a sufficient amount and during a sufficient time to achieve a measurable improvement of the flavour stability of the beverage compared with a similar beverage which has not been in contact with the flavin-binding compound. In this specification the expression "inactivating the riboflavin-like compound or compounds present in that beverage" means preventing riboflavin-like compounds from generating free radicals in that beverage by allowing such riboflavin-like compounds to bind to a flavin-binding compound.

A **first embodiment** of the invention is a **process in which the flavin-binding compound is incorporated into said beverage** in an amount sufficient to observe a measurable improvement of the flavour stability of the beverage during storage compared with a similar beverage to which the flavin-binding compound was not added.

A **second embodiment** of the present invention is a **process in which inactivation of the riboflavin-like compound or compounds is achieved by**
(a) contacting the beverage with a sufficient amount of said flavin-binding compound immobilized on a beverage-compatible carrier material, followed by
(b) allowing the riboflavin-like compound or compounds to form a complex with the immobilized flavin-binding compound, and
(c) subsequently separating the immobilized complex from the beverage.

By such process the riboflavin-like compound or compounds are first bound and subsequently removed from the beverage.

Preferably the flavin-binding compound is a protein. Examples include flavodoxin and riboflavin-binding protein. It is also envisaged that other flavin-binding compounds can be used, which include antibodies against riboflavin or a riboflavin-like compound, especially against the light-active site of it, or a fragment of such antibody like (Fab')₂, Fab, Fv, scFv, or variable heavy chain fragments (V_{H} originating from a "classical" antibody or HC-V originating from a "heavy chain" antibody).
The experiments described in the Examples below show, that at least 1.3 µMolar riboflavin-binding protein or flavodoxin is suitable for effectively decreasing the radical formation in beer or beer model systems containing typically about 1 ppm riboflavin. Thus the decreased radical formation is achieved upon addition of at least 0.5 molar concentration of a flavin-binding compound. Preferably the amount of flavin-binding compound is more, e.g. at least equimolar, or better on a molecular basis more than two, or even more than 5 times the amount capable of binding to a riboflavin-like compound, that promotes free radical formation. Of course, the amount of the flavin-binding compound is dependent on the affinity of the flavin-binding compound to the riboflavin-like compounds. The higher this affinity, the lower the amount of flavin-binding compound is required to bind most of the riboflavin present in the light-sensitive beverage. Such affinity can be measured by general techniques known to those skilled in the art (see e.g. Bruggeman *et al*. (1995) **reference 13**). When the affinity of a flavin-binding compound and subsequently the amount of flavin-binding compound is determined, or simply by testing various amounts of flavin-binding compound for example in a scale of 1:10:100:1000 etc., the final testing of an improvement of the flavour stability of the beer or beverage and/or the absence or formation of sunstruck flavour is evaluated by a test panel trained in judging the flavour of the beverage by smelling or tasting or both.
The upper limit of added flavin-binding compound is determined by practical conditions like price of the binding compound, influence on the taste, etc. In general one will not add excessive amounts of any compound to a consumable product like beer and other light-sensitive beverages.
Therefore, a practical upper limit is 0.5 wt.% flavin-binding compound per volume beverage.

A preferred carrier material for the immobilisation of the flavin-binding compound is a silica-type material, because such material is already in use in the production of beer.
But other carrier materials can also be used, which are preferably "food-grade", an example of which is AVICEL^{R} (food-grade cellulose).

When antibodies or fragments thereof are used as a flavin-binding compound, they can be coupled to a carrier material according to known techniques. For example, European granted patent EP-B1-0434317 (1997 and 1991; **reference 14**) claims immunoadsorbent materials comprising a specific binding agent (SBA) immobilised on a porous solid phase carrier material.
The SBA can have a molecular weight of upto about 25,000 and can be composed of one or more variable domain proteins (VH and/or VL; where corresponding VH and VL are held together solely by natural interactions), or it can be a natural Fv fragment or a Dab or an scFv fragment. The SBA can be bound to the porous solid phase carrier material by a, preferably hydrophobic, linker that can have e.g. 5-20 amino acid residues. The immobilised immunoadsorbents can be used in an affinity purification process. Exemplified are agarose and porous silica (both glutaraldehyde-activated silica and epoxy silica converted to the diol derivative) as the porous carrier material and anti-lysozyme Fv and Dab (= anti-lysozyme V_{H} with a "myc" peptide linking the V_{H} to the silica carrier material) as the antibody fragment.

Another way of immobilizing a proteinaceous flavin-binding compound is by producing a transformed yeast having at its outer surface the proteinaceous flavin-binding compound according to the method described in PCT application WO 94/18330 (1994; **reference 15**), in which recombinant DNA techniques are used for producing said binding protein or a functional part thereof. The binding protein is immobilized by producing it as part of a chimeric protein also comprising an anchoring part derivable from the C-terminal part of an anchoring protein, thereby ensuring that the binding protein is localized in or at the exterior of the cell wall of the host cell. As suitable anchoring proteins are mentioned yeast α-agglutinin, FLO1 (a protein associated with the flocculation phenotype in *S. cerevisiae*), the Major Cell Wall Protein of lower eukaryotes, and a proteinase of lactic acid bacteria. For secretion the chimeric protein can comprise a signal peptide including those of α-mating factor of yeast, α-agglutinin of yeast, invertase of *Saccharomyces*, inulinase of *Kluyveromyces*, α-amylase of *Bacillus*, and proteinase of lactic acid bacteria.
Also provided in reference 15 is a process for carrying out an isolation process by using such transformed host, wherein a medium containing a specific compound is contacted with such host cell to form a complex, separating said complex from the medium and, optionally, releasing said specific compound from said binding protein.

Such proteinaceous flavin-binding compound can be a flavin-binding protein or an antibody against a riboflavin-like compound or a fragment of such antibody.
If heavy chain antibodies or fragments thereof are desirable, antibodies and antibody fragments against a riboflavin-like compound can be used similar to those described in PCT application WO 94/04678 (1994; **reference 16**) and PCT application WO 94/25591 (1994; **reference 17**), which heavy chain anti-bodies or fragments thereof are devoid of light chains.

A **third embodiment** of the invention is a **beer or other light-sensitive beverage stabilized against the formation of sunstruck flavour** by **either** incorporating into said beverage a sufficient amount of a flavin-binding compound capable of binding to the riboflavin-like compound or compounds present in said beverage, **or** by removing the riboflavin-like compound or compounds by treating the beverage with an immobilized flavin-binding compound. Such beverage can be a result of a process according to the first or second embodiment of the invention. If the riboflavin is not removed from the beverage, the latter preferably contains a sufficient amount of the flavin-binding compound such, that the sunstruck flavour is not detectable if the beverage packaged in a light-permeable container, preferably a clear glass bottle, is exposed to light at 40 °C. for half an hour. This exposure is an accelerated test for the storage stability of the beverage. Preferably as flavin-binding compound is used riboflavin-binding protein or flavodoxin or both, which can be isolated from natural sources.
The addition of a flavin-binding compound will result in a **beverage having an increased flavour stability and being less light-sensitive**. It has been found that the use of a flavin-binding compound not only suppresses the formation of sunstruck flavour, but it also delays the formation of stale flavour.

The invention is illustrated with some Examples, in which experiments are described with flavodoxin and riboflavin-binding protein to scavenge riboflavin in beer and beer model systems. The Examples are preceded by a "Materials and Methods" section including the preparation of both the flavodoxin and the riboflavin-binding protein used in the Examples.

### Materials and Methods

### A. Purification of C69A flavodoxin from E. coli (containing a plasmid comprising a gene encoding the C69A mutant of Azotobacter vinelandii flavodoxin).

*A. vinelandii* flavodoxin is able to dimerize due to the formation of intermolecular disulphide bonds between individual flavodoxin molecules, which can result in a loss of biological activity. To prevent this dimerization a mutant flavodoxin was produced in which the only cysteine residue was replaced by an alanine residue resulting in a modified flavodoxin indicated as C69A flavodoxin.

### Reagents

**Buffer A** contains 100 mMolar Tris-HCl, pH 8.0 with 0.5 mMolar EDTA and 0.5 mMolar DTT (dithiothreitol).
**Buffer B** contains 50 mMolar KPi pH 7.0 (K₂HP0₄/KH₂PO₄) with 150 mMolar KCl and 0.5 mMolar EDTA
**Sodium acetate buffers** of pH 3.0 and pH 6.0.
**Ty medium** contains casein hydrolysate (10 g/l), yeast extract (5 g/l) and KCl (5 g/l).

### Protein purification

- Grow *E. coli* cells for 24 h. at 37 °C. in an 8 l fermenter filled with Ty medium at pH 7.4. The *E. coli* used was made before by transformation of an *E. coli* through introduction of an expressible gene encoding the C69A mutant of *A. vinelandii* flavodoxin using conventional recombinant DNA techniques.
- Harvest cells by centrifugation (15 minutes, 8000 rpm).
- Resuspend 1:1 with buffer A, together with DNase, 1.5 mMolar MgCl₂ and 0.75 mMolar EDTA.
- Perform French press (1000 bar) in order to break the cells (do this twice).
- Spin remaining cell walls down by centrifugation for 15 minutes 15,000 rpm. Collect cell free extract (CFE).

### Step 1 Protamine sulphate precipitation

Protamine sulphate (ex Sigma) is a strong basic protein which binds DNA and big biomolecules by electrostatic interactions.
Gently add protamine sulphate to the CFE (on ice, continuous stirring) till the concentration is 0.5% (wt./vol.).
Spin precipitated proteins down (15 minutes, 15,000 rpm) and collect supernatant.

### Step 2 50% ammonium sulphate precipitation

Carefully adjust the supernatant to 50% saturation by gradually adding pulverized ammonium sulphate (on ice, stirring). Remove yellow/white precipitate by centrifugation (15 minutes, 15,000 rpm) and collect green supernatant.

### Step 3 75% ammonium sulphate precipitation

Carefully adjust the green supernatant to 75% saturation by gradually adding pulverized ammonium sulphate (on ice, stirring). Remove white precipitate by centrifugation (15 minutes, 15,000 rpm) and collect bright yellow supernatant.

### Step 4 Anion exchange chromatography (DEAE-Sepharose)

Use a DEAE-sepharose column connected to a Fast Protein Liquid Chromatography (FPLC) system. Equilibrate with 75% ammonium sulphate in buffer A with 3 ml/minute. Apply yellow supernatant onto the column (3 ml/minute). DEAE is positively charged and is capable of binding negatively charged ions.
However, at 75% ammonium sulphate all binding places are occupied by SO₄-ions. Because of this, the proteins which are applied onto the column do not have charged interaction but only hydrophobic interaction. In this case, the DEAE column serves as a hydrophobic interaction column.
Wash the column with buffer A + 75% ammonium sulphate for several hours. Flavodoxin binds strongly to the column, whereas most other proteins will elute. Flavodoxin is eluted from the column by using a 1 Molar KCl solution (3 ml/minute). Dialyse protein extracts against buffer A.

### Step 5 Anion exchange chromatography (High Load Q Sepharose)

Use a High Load Q Sepharose (ex Pharmacia) column connected to an FPLC system. Equilibrate column with buffer A (3 ml per minute). Apply the yellow protein extract onto the column and use the following salt gradient;
0 - 16 minutes: 0.1 Molar KCL in buffer A,
16 - 96 minutes: 0.1 Molar KCL - 0.7 Molar KCL in buffer A,
96 - 100 minutes: 0.7 Molar KCL -1.0 Molar KCL in buffer A,
100 - 108 minutes: 1.0 Molar KCL in buffer A,
108 - 113 minutes: 1.0 Molar KCL - 0.1 Molar KCL in buffer A,
113 - 128 minutes: 0.1 Molar KCL in buffer A.

Flavodoxin starts to elute at 0.49 Molar. Collect the yellow fractions and concentrate using a Amicon YM-10 filter (end volume 5 ml). Dialyse against buffer B.

### Step 6 Gel filtration

Equilibrate a Superdex 75PG, 26/600 (ex Pharmacia) column with buffer B (0.5 ml/minute).
Apply (concentrated) flavodoxin extract onto the column. Use a flow rate of 1.0 ml/minute. Collect the yellow fraction.

### Step 7 Apo-protein preparation

Add cold trichloroacetic acid (TCA, dissolved in 0.3 Molar Tris + 0.3 mMolar EDTA) to give an end concentration of 5% (wt./vol.) TCA. Allow to stand for 5 minutes in darkness, then centrifuge (10 minutes, 10,000 rpm). Discard yellow supernatant. Resuspend white precipitate in 5% TCA (in 0.3 Molar Tris, 0.3 mMolar EDTA). Centrifuge mixture as before and dissolve precipitate in a minimum volume of 0.3 Molar Tris pH 7 and 0.3 mMolar EDTA. Dialyse against 0.1 Molar KPi pH 7 and 0.3 mMolar EDTA and store at 4 °C.

Measure from all purification steps the volume of the supernatant and take 0.5 ml samples for SDS-PAGE analysis and protein determination. To get an indication of the purity of the different fractions, the absorbance ratio A₂₈₀/A₄₅₅ can be measured.

| **Step** | **Total Protein (mg/ml)** |
|---|---|
| CFE | 50.4 |
| Protamine sulphate | 23.5 |
| 50% ammonium sulphate | 13.8 |
| 75% ammonium sulphate | 3.6 |
| DEAE-Separose 75% ammonium sulphate | 3.6 |
| High Load Q Sepharose | 184 |
| Gel filtration | 3.5 |
| Apo Preparation | 1.7 |

### B. Purification of riboflavin-binding protein (RfBP) from chicken egg white

Chicken riboflavin-binding protein is an acidic, stable phosphoglycoprotein. It binds one molecule of riboflavin with a dissociation constant of 1.3 nMolar. It is produced in the liver and ovioduct of the laying hen and is deposited in the yolk and white of eggs.The yellowish cast of a typical egg white is due to riboflavin bound to this protein (native egg white RfBP is normally only about 30-35% saturated with riboflavin). Although a single estrogen-responsive gene controls the synthesis of the protein in the liver and ovioduct, the protein isolated from yolk has a more complicated carbohydrate composition and appears to be missing seven carboxy terminal amino acids present in the egg white protein.

### Reagents

50 mMolar sodium acetate pH 4.5
25 mMolar sodium acetate pH 3.0
25 mMolar sodium acetate pH 5.6
100 mMolar KPi pH 6.0
10 mMolar riboflavin (5 mg riboflavin dissolved in 1 ml dimethylsulfoxide (DMSO))

### Protein purification

### Step 1 Preparation of egg white

Break 12 eggs and carefully separate the egg white from the egg yolk. Collect the egg white in a beaker and store on ice. Dilute the egg white to 1 litre with 50 mMolar sodium acetate pH 4.5. Add 1 ml 10 mMolar riboflavin and gently stir for 30 minutes on ice. Remove the insoluble precipitate by centrifugation (20 minutes, 14,000 rpm).

### Step 2 Anion exchange chromatography

Pack a column (50 ml bed volume) with DEAE-sepharose (ex Pharmacia). Equilibrate with 50 mMolar sodium acetate pH 4.5. Use a flow rate of 1 ml/minute. Carefully apply the egg white solution onto the column and wash with 50 mMolar sodium acetate to remove unbound protein. Elute the RfBP with 50 mMolar sodium acetate + 1 Molar NaCl. Collect the yellow band.

### Step 3 Ammonium sulphate precipitation

Carefully adjust to 55% saturation by gradually adding pulverized sulphate (upon stirring on ice). Remove the white precipitate by centrifugation (10 minutes, 10,000 rpm) and carefully collect the supernatant. Measure the volume of the supernatant and precipitate the RfBP by gradually adding pulverized ammonium sulphate to 85% saturation (stir on ice). Dissolve the precipitate in 5 ml 0.1 Molar KPi buffer pH 6.0 and dialyse the yellow protein solution against the same buffer.

### Step 4 Gel filtration

Equilibrate a Superdex-200 PG (ex Pharmacia) column in 50 mMolar KPi buffer pH 6.0. Carefully apply the partially purified protein onto the column. Use a flow rate of 1.0 ml/minute. Collect the yellow fraction.

### Step 5 Preparation of apo-protein by CM-sepharose chromatography

The binding of riboflavin is pH dependent (pKa = 3.5). Adjust the pH of the protein solution to pH = 3. The riboflavin will completely dissociate from RfBP.
Pack a CM (= Carboxymethyl) sepharose (ex Pharmacia) column (20 ml) and equilibrate with 25 mMolar sodium acetate pH 3.0.
Apply RfBP solution (pH = 3) onto the column. Apo-RfBP will bind to the column. Wash with 25 mMolar sodium acetate pH 3 to remove riboflavin. Elute apo-RfBP with 25 mMolar sodium acetate pH 5.6 + 200 mMolar NaCl.
Dialyse pure apo-RfBP with 25 mMolar sodium acetate pH 3.0 and store at 4 °C.

Measure from all purification steps the volume of the supernatant and take 0.5 ml samples for SDS-PAGE analysis and protein concentration determination. To get an indication of the purity of the different fractions, the absorbance ratio A₂₈₀/A₄₅₅ can be measured.

| **Step** | **Protein (mg/ml)** |
|---|---|
| Egg White | 18.8 |
| DEAE-FF | 7.5 |
| ammonium sulphate | 3.4 |
| Gel filtration | 0.15 |
| CM Sepharose | 0.69 |
| Concentrated Apo-protein | 3.0 |

### Model System Studies

### ESR analysis

A sample of beer/model beer (light treated plus spin trap) was put in an open-ended capillary electron spin resonance (ESR) tube (outer radius = 3 mm; inner radius = 1.5 mm) which was placed in a bigger ESR tube (radius = 5 mm). Both tubes were of Suprasil 1 quartz (ex Heraeus, Nijmegen). The smallest ESR tube had a sealed rubber tube at the end so it worked like a teat. The sample column in the smallest tube was 1 cm above the bottom and at least 2 cm long. The free radicals were detected in a Bruker ER 200 D electron para-magnetic resonance spectrometer at the following conditions:

| | |
|---|---|
| Field | 3485 Gauss |
| Sweep width | 100 Gauss |
| Attenuation | 10 dB |
| Modulation amplitude | 2.5 Gauss |
| Gain | 1.25E6 |
| Frequency | 9.74 GHz |
| Sweep time | 200 s |
| Time constant | 0.2 s |
| Temperature | Room temperature |

### Comparative Example 1 Effect of riboflavin upon free radical formation

Riboflavin (0, 0.5, 1, 2, 3, 4, 5, 6, 7, 8, 9 and 10 µg/ml) was suspended in 1 ml of 5% (v/v) ethanol containing 50 mMolar sodium acetate adjusted to pH 4.0 with glacial acetic acid. The spin trap: N-t-Butyl-α-phenylnitrone (PBN) was added in 0.25 ml aliquots to each 1 ml riboflavin solution so that the final PBN concentration was 25 mMolar.
Each solution was exposed to light (8 W fluorescent tube in an enclosed light box) in a 1.5 ml sealed, clear glass GC vial for 4 hours. During this time the temperature of the sample did not exceed 20 °C. The resultant light-treated solution was analyzed for free radicals using electron spin resonance.

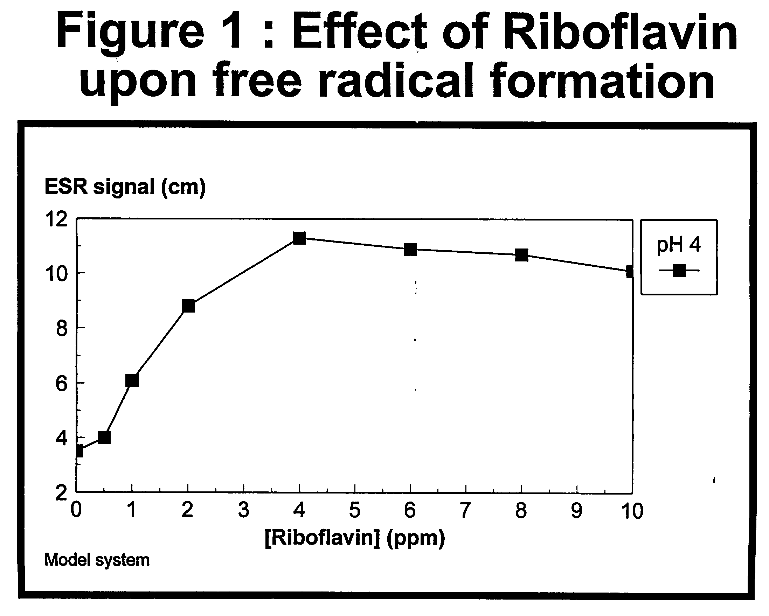

The results are presented in Figure 1, which shows that with increasing level of riboflavin the ESR signal also increases until about 5 ppm riboflavin, after which no further increase in ESR signal is observed. Further experiments with model systems were conducted using a standard level of riboflavin of 1 ppm. This is in agreement with a typical beer riboflavin level of 0.1 - 0.8 ppm.

### Examples 1-2 and Comparative Example 2

### Effect of flavin-binding proteins and bovine serum albumin (BSA) upon free radical formation

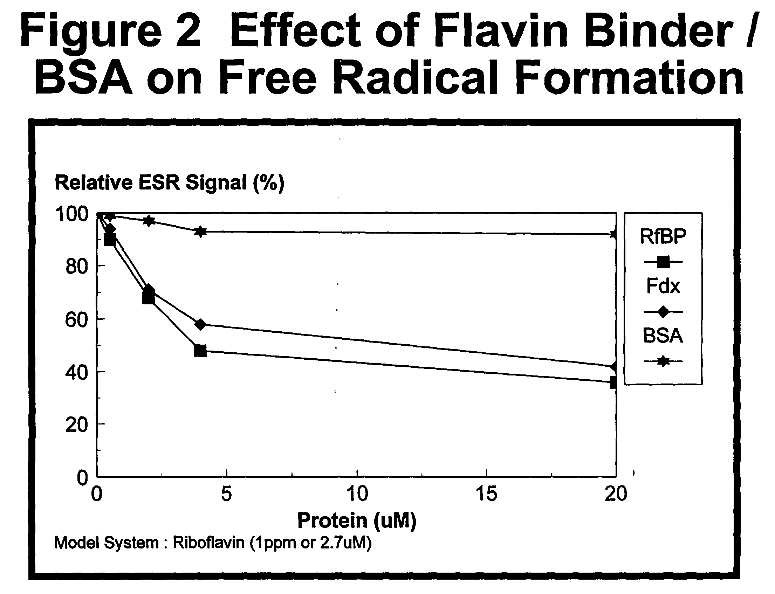

Riboflavin (1 ppm or 2.7 µMolar) was suspended in 1 ml of 5% (v/v) ethanol containing 50 mMolar sodium acetate adjusted to pH 4.0 with glacial acetic acid. The spin trap: N-t-Butyl-α-phenylnitrone (PBN) was added in 0.25 ml aliquots to each 1 ml riboflavin solution so that the final PBN concentration was 25 mMolar. To this model system was added the protein to be tested in a range of concentrations (0, 0.5, 2.0, 4.0 and 20.0 µMolar) for each of riboflavin-binding protein (RfBP; **Example 1**), flavodoxin (Fdx; **Example 2**) and, as comparison, bovine serum albumin (ex Sigma; **Comparative Example 2**).
Each solution was exposed to light (8 W fluorescent tube in an enclosed light box) in a sealed, clear glass GC vial for 4 hours. During this time the temperature of the sample did not exceed 20 °C. The resultant light treated solution was analyzed for free radicals using electron spin resonance.
The results are presented in Figure 2, which shows that with increasing concentration of flavin binder the amount of free radicals is reduced for both riboflavin-binding protein and flavodoxin. In the samples treated with BSA the amount of free radicals does not change with increasing BSA concentration, although the starting level of free radicals is lower than without BSA addition.
These results suggest that the specific flavin-binding properties of RfBP and Fdx suppress the tendency of riboflavin to generate free radicals upon exposure to light. Apparently it is not protein *per se* that suppresses free radical formation, because BSA does not produce a similar result.

### Examples 3-4 Effect of flavin binding proteins upon "sunstruck" flavour formation in model beer systems

Riboflavin (1 ppm or 2.7 µMolar) was suspended in 1 ml of 5% (v/v) ethanol containing 50 mMolar sodium acetate adjusted to pH 4.0 with glacial acetic acid. Cysteine.HCl (ex Sigma) and Isohopcon (ex English Hop Products, UK) were added to the model system to give final concentrations of 10 ppm and 20 ppm, respectively. To this model system was added flavin binder in a range of concentrations (0, 0.3, 1.3, 2.7 and 13.5 µMolar) for each of riboflavin-binding protein (RfBP; **Example 3**) and flavodoxin (Fdx; **Example 4**).
Each solution was exposed to light (8 W fluorescent tube in an enclosed light box) in a sealed, clear glass GC vial for 4 hours. During this time the temperature of the sample did not exceed 20 °C. The resultant light treated solution was evaluated for aroma of "sunstruck" flavour by a trained flavour panel.

**Table I**

| **Flavour Evaluation of Model System Samples treated with RfBP/Fdx** | | | | | |
|---|---|---|---|---|---|
| Isohop (ppm) | Riboflavin (µMolar) | Cysteine (ppm) | RfBP (µMolar) | Fdx (µMolar) | Sunstruck |
| 20 | 2.7 | 10 | - | - | ++ |
| 20 | 2.7 | 10 | 0.3 | - | + |
| 20 | 2.7 | 10 | 1.3 | - | +/- |
| 20 | 2.7 | 10 | 2.7 | - | absent |
| 20 | 2.7 | 10 | 13.5 | - | absent |
| 20 | 2.7 | 10 | - | 0.3 | absent |
| 20 | 2.7 | 10 | - | 1.3 | absent |
| 20 | 2.7 | 10 | - | 2.7 | absent |
| 20 | 2.7 | 10 | - | 13.5 | absent |

The results are shown in Table I above, which shows that with increasing level of either RfBP or Fdx the "sunstruck" flavour decreases. Fdx appears to be more efficient at reducing "sunstruck" flavour formation than RfBP.

The results of Examples 1-4 show that the flavin-binding property of both riboflavin-binding protein and flavodoxin in binding riboflavin has resulted in reduced formation of free radicals and of "sunstruck" flavour in a beer model system.

### Example 5 Effect of flavin-binding proteins upon "sunstruck" flavour formation in beer systems

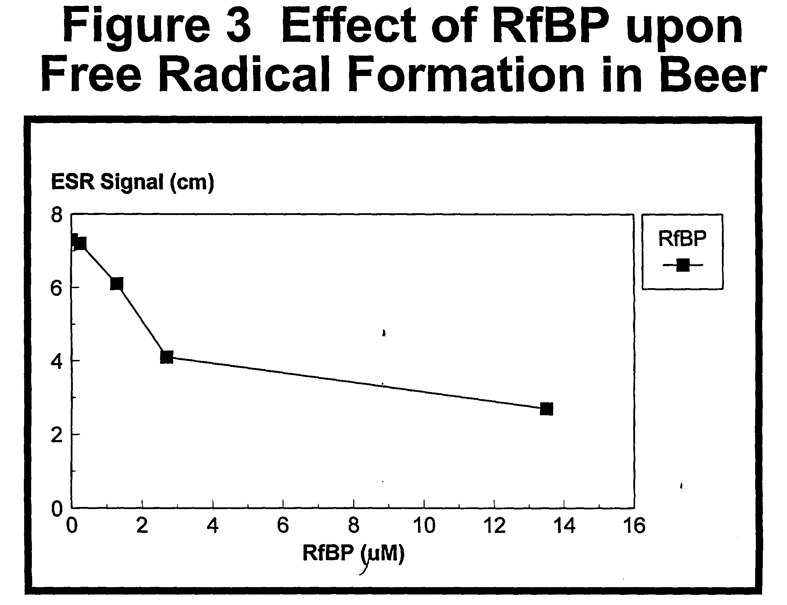

A very pale lager (1 ml) was treated with riboflavin-binding protein (RfBP) to give a final concentration of protein of 0, 0.3, 1.3, 2.7 and 13.5 µMolar. The spin trap: N-t-Butyl-α-phenylnitrone (PBN) was added in 0.25 ml aliquots to each 1 ml of beer so that the final PBN concentration was 25 mMolar. Each solution was exposed to light (8 W fluorescent tube in an enclosed light box) in a sealed, clear glass GC vial for 4 hours. During this time the temperature of the sample did not exceed 20 °C. The resultant light treated solution was analyzed for free radicals by electron spin resonance.
The results are presented in Figure 3, which shows that the free radical signal decreases with increasing level of RfBP. This experiment confirms that the binding capacity of riboflavin-binding protein for flavin photosensitisers reduces the free radical formation in beer.

### REFERENCES

1. **Y. Kuroiwa and N. Hashimoto**; American Society of Brewing Chemists (ASBC) Proceedings (1961) 28-36; Composition of Sunstruck Flavour Substance and Mechanism of Its Evolution
2. **C. Blockmans, J. vande Meersche, C.A. Masschelein and A. Devreux**; Proceedings of the European Brewery Convention (EBC), 18th Congr., Copenhagen (1981) 347-357; Photodegradation and formation of carbonyl- and sulphur compounds in beer
3. **A.J. Irwin, L. Bordeleau, and R.L. Barker**; ASBC Journal 51 (1993, No.1) 1-3; Model Studies and Flavor Threshold Determination of 3-Methyl-2-Butene-1-Thiol in Beer
4. **A. Devreux, C. Blockmans, and J. vande Meersche**; EBC Monograph VII, Copenhagen - November (1981) 191-201; CARBONYL COMPOUNDS FORMATION DURING AGING OF BEER
5. **M. Tanaka, M. Harris, and K.T. Yasunobu**; Biochem. Biophys. Res. Commun. 66 (1975) 639-644; The amino acid sequence of the *Azotobacter vinelandii* flavodoxin
6. **L.T. Bennett, M.R. Jacobson, and D.R. Dean**; J. Biol. Chem. 263 (1988) 1364-1369; Isolation, Sequencing, and Mutagenesis of the *nif*Fin gene encoding flavodoxin from *Azotobacter vinelandii*
7. **J.J. Pueyo, G.P. Curley and S.G. Mayhew**; Biochem. J. 313 (1996) 855-861; Kinetics and thermodynamics of the binding of riboflavin, riboflavin 5'-phosphate and riboflavin 3',5'-biphosphate by apoflavodoxins
8. **US-PS 4534971**; published 13.08.1985; J. F. Fisher (Regents of the University of Minnesota, USA); expired 15.08.1993; Complexation of anthracycline and anthraquinone antibiotics by the apo riboflavin binding protein from eggs
9. **J. Becvar** (1973) Ph.D. thesis, University of Michigan
10. **Y. Hamazume, T. Mega, and T. Ikenaka**; J. Biochem. 95 (1984) 1633-1644; Characterization of Hen Egg White- and Yolk-Riboflavin Binding Proteins and Amino Acid Sequence of Egg White-Riboflavin Binding Protein
11. **W.S.A. Innis-Whitehouse, A.H. Merrill Jr., and D.B. McCormick** in Chapter 11 (Riboflavin Binding Proteins) of the book Chemistry and Biochemistry of Flavoenzymes, Vol. I, edited by F. Müller, CRC Press, Boston, (1991) 287-292
12. **SIGMA Chemical Company**, Catalog (1991) Biochemicals Organic Compounds for Research and Diagnostic Reagents, page 894
13. **Y.E. Bruggeman, R.G. Schoenmakers, A. Schots, E.H.W. Pap, A. van Hoek, A.J.W.G. Visser and R. Hilhorst**; Eur. J. Biochem. 234 (1995) 245-250; Monoclonal antibodies against two electron reduced riboflavin and a quantification of affinity constants for this oxygen-sensitive molecule
14. **European granted patent EP-B1-0434317**; CROSFIELD LIMITED; published on 05.03.1997 and as application on 26.06.1991; Immunoadsorbents
15. **PCT application WO 94/18330**; UNILEVER; published on 18.08.1994; Process for immobilizing binding proteins to the cell wall of a microbial cell by producing a fusion protein
16. **PCT application WO 94/04678**; C. Casterman & R. Hamers; published on 03.03.1994; Immunoglobulins devoid of light chains
17**. PCT application WO 94/25591**; UNILEVER and FREE UNIVERSITY OF BRUSSELS; published on 10.11.1994; Production of antibodies or (functionalized) fragments thereof derived from heavy chain immunoglobulins of *Camelidae*

## Claims

1. **A process for increasing the flavour stability of beer or other light-sensitive beverage**, which process comprises inactivating a riboflavin-like compound or riboflavin-like compounds present in that beverage by allowing them to bind to a flavin-binding compound present in a sufficient amount and during a sufficient time to achieve a measurable, improvement of the flavour stability of the beverage compared with a similar beverage, which has not been in contact with the flavin-binding compound.

2. A process according to claim 1, in which the flavin-binding compound is incorporated into said beverage in an amount sufficient to observe a measurable improvement of the flavour stability of the beverage during storage compared with a similar beverage to which the flavin-binding compound was not added.

3. A process according to claim 1, in which inactivation of the riboflavin-like compound or compounds is achieved by
(a) contacting the beverage with a sufficient amount of said flavin-binding compound immobilized on a beverage-compatible carrier material, followed by
(b) allowing the riboflavin-like compound or compounds to form a complex with the immobilized flavin-binding compound, and
(c) subsequently separating the immobilized complex from the beverage.

4. A process according to claim 3, in which the carrier material is a silica type material.

5. A process according to anyone of claims 1-4, in which the flavin-binding compound is a protein.

6. A process according to claim 5, in which the proteinaceous flavin-binding compound is selected from the group consisting of riboflavin-binding protein and flavodoxin.

7. A process according to any one of claims 1-6, in which the improvement of the flavour stability of the beverage is evaluated by a test panel trained in judging the flavour of the beverage by smelling or tasting or both.

8. **A beer or other light-sensitive beverage stabilized against the formation of sunstruck flavour** by
**either** incorporating into said beverage a sufficient amount of a flavin-binding compound capable of binding the riboflavin-like compound or compounds present in said beverage,
**or** by removing the riboflavin-like compound or compounds by treating the beverage with an immobilized flavin-binding compound.

9. A beverage according to claim 8, in which the sunstruck flavour is not detectable if the beverage packaged in a light-permeable bottle is exposed to light at 40 °C. for half an hour.

10. A beverage according to claim 8 or 9, which contains riboflavin-binding protein or flavodoxin or both.

11. **A beer or other light-sensitive beverage with increased flavour stability** due to the incorporation of at least one flavin-binding compound capable of binding riboflavin-like compounds.

12. A beverage according to claim 11, which contains a sufficient amount of riboflavin-binding protein or flavodoxin or both.
